# EUROPÄISCHE PATENTSCHRIFT

(11) **EP 3 721 696 B1**
(45) Veröffentlichungstag und Bekanntmachung des Hinweises auf die Patenterteilung: **19.04.2023**
(21) Anmeldenummer: 20151432.0
(22) Anmeldetag: 13.01.2020
(51) Int. Cl.: A01D 90/04

(54) **ERNTEMASCHINE MIT EINER SCHNEIDVORRICHTUNG**
HARVESTING MACHINE WITH A CUTTING DEVICE
MACHINE DE RÉCOLTE DOTÉE D'UN DISPOSITIF DE COUPE

(30) Priorität: 10.04.2019 DE 102019109479
(43) Veröffentlichungstag der Anmeldung: 14.10.2020
(73) Patentinhaber: Usines CLAAS France S.A.S, 57140 St. Rémy / Woippy (FR)
(72) Erfinder: Baré, Floren, 55150 Azannes et Soumazannes (FR); Batancourt, Grégory, 57130 Vionville (FR); Rise, Nicolas, 57645 Retonfey (FR); Thibault, Laruelle, 57130 Ars sur Moselle (FR)
(74) Vertreter: CLAAS Gruppe

(56) Entgegenhaltungen:
- EP-A1- 3 092 890
- DE-A1-102016 120 528
- DE-U1-202004 014 704

## Beschreibung

Die Erfindung betrifft eine Erntemaschine, insbesondere eine Ballenpresse oder einen Ladewagen, mit einer Schneidvorrichtung für landwirtschaftliches Erntegut gemäß dem Oberbegriff des Anspruchs 1.

Zur Aufnahme von am Boden, beispielsweise in einem Schwad, abgelegten Erntegutes weisen Erntemaschinen wie landwirtschaftliche Ballenpressen oder Ladewagen eine Aufnahmevorrichtung, eine sogenannte Pickup, auf. Durch die Pickup kann das Erntegut, beispielsweise Halm- und/oder Blattgut, aufgenommen und einer weiteren Verarbeitung oder Lagerung zuführt werden. Eine derartige Pickup weist dabei oftmals eine Schneidvorrichtung zum Zerkleinern des Erntegutes auf.

Bei Ballenpressen und Ladewagen wird eine Förderung des Erntegutes im Wirkungsbereich der Schneidvorrichtung durch einen Förderrotor bewirkt, der sich um eine quer zur Gutstromrichtung angeordnete Drehachse dreht und in axialer Richtung, entlang der Drehachse, zumeist mit einer Vielzahl von Rotorsternen ausgestattet ist. Die Rotorsterne sind in der Regel mit den äußeren Enden leicht verdreht zueinander auf der Achse montiert, um eine weitestgehend kontinuierliche Förderung des Ernteguts sowie gleichmäßige Belastung des zugehörigen Antriebsstrangs zu erzielen. Schneidmesser zum Schneiden des Erntegutes sind teilweise innerhalb des Erntegutkanals angeordnet, wodurch diese einem erhöhten Verschleiß unterliegen und der Wartungsaufwand bei Verschleiß oder Beschädigung von Schneidmessern mit einem hohen Wartungsaufwand und längeren Stillstandzeiten verbunden ist.

Aus der DE 20 2017 100 339 U1 ist eine Schneidvorrichtung für eine landwirtschaftliche Erntemaschine in Form einer Ballenpresse bekannt, die in einer Anbauvorrichtung zur Aufnahme des Erntegutes angeordnet ist. Die Schneidvorrichtung weist eine Vielzahl an Schneidmessern auf, welche in einen Erntegutkanal hineinragen, durch den das Erntegut von einem Förderrotor nach der Aufnahme vom Boden in Richtung der Presse gefördert wird. Die Schneidmesser weisen dabei zwei an gegenüberliegenden Seiten angeordnete Schneiden auf und sind mit einer Überlastsicherung ausgestattet, welche ein Ausweichen der Schneidmesser zum Schutz vor Beschädigungen, beispielsweise durch Steine in dem Erntegut, ermöglicht. Bei einer Beschädigung einer ersten Schneide eines Schneidmessers kann diese durch ein Drehen des Schneidmessers gegen die zweite Schneide ausgetauscht werden. Ein Austausch des gesamten Schneidmessers entfällt somit. Nachteilig ist jedoch, dass ein Wechsel der mit dem Erntegut im Eingriff stehenden Schneide, händisch erfolgt und aufwändig ist, da das Schneidmesser gelöst und umgedreht wieder eingebaut werden muss. Dies erfordert eine erhöhte Stillstandzeit der Presse und birgt zudem eine Verletzungsgefahr für den Bediener, der in dem beengten Bauraum das entsprechende Schneidmesser umbauen muss.

Eine weitere Schneidvorrichtung zum Zerkleinern von aufgenommenem Erntegut ist aus der DE 10 2007 028 884 A1 bekannt. Die Schneidvorrichtung weist dabei eine Vielzahl kreisförmiger, rotierender Messerscheiben auf, welche in einen vom Erntegut durchströmten Erntegutkanal des Ladewagens hineinragen. Bei Kontakt mit dem Erntegut rotieren die Messerscheiben, wobei die Standzeit der Messerscheiben gegenüber feststehenden Schneidmessern erhöht sein kann, da die Messerscheiben eine deutlich längere äußere Schneidkante aufweisen als feststehende Schneidmesser, wodurch sich der Verschleiß auf über eine größere Schneidkante verteilt und die Messerscheiben dadurch eine längere Standzeit haben können. Nachteilig ist hierbei jedoch, dass bei einer Beschädigung und einem notwendigen Austausch einer Messerscheibe ein hoher Wartungsaufwand und eine längere Stillstandzeit erforderlich ist, um die Entsprechende Messerscheibe auszutauschen.

Es ist daher eine Aufgabe der vorliegenden Erfindung, eine mit einer Schneidvorrichtung ausgestattete Erntemaschine anzugeben, die eine Reduzierung des Wartungsaufwandes der Schneidvorrichtung ermöglicht.

Die Aufgabe wird erfindungsgemäß durch die kennzeichnenden Merkmale des unabhängigen Patentanspruches 1 gelöst. Vorteilhafte Ausgestaltungen und Weiterbildungen der Erfindung ergeben sich aus den nachstehenden Unteransprüchen und den nachfolgenden Beschreibungen.

Eine Erntemaschine, insbesondere Ballenpresse oder Ladewagen, weist eine Schneidvorrichtung für landwirtschaftliches Erntegut auf, wobei die Schneidvorrichtung eine Vielzahl von jeweils in einer Schneidebene wirkenden Schneidelementen aufweist, wobei die Schneidelemente in Bezug auf einen von Erntegut durchströmten Erntegutkanal nebeneinander angeordnet sind und während des Betriebes der Schneidvorrichtung zum Schneiden von Erntegut durch ein mit Ausnehmungen versehenes Gutleitelement zumindest teilweise in den Erntegutkanal hineinragen und einen antreibbaren Förderrotor zum Fördern des Erntegutes. Gemäß der Erfindung weist ein Schneidelement mindestens zwei Schneidmesser auf, und ist um eine Rotationsachse drehbar gelagert und in Stellschritten um die Rotationsachse, insbesondere zum Schneiden von Erntegut, verstellbar ausgebildet.

Die Schneidvorrichtung gemäß der Erfindung ermöglicht ein Rotieren der Schneidelemente mit geringem Aufwand, wodurch ein beispielsweise beschädigtes oder stumpfes Schneidmesser durch ein scharfes ersetzt werden kann. Dadurch können die Schneidelemente der rotierenden Schneidvorrichtung im Gegensatz zu herkömmlichen Messern länger genutzt werden, bevor ein Nachschleifen oder ein Austausch notwendig ist. Dadurch können die Standzeit der Schneidvorrichtung erhöht und die Wartungsintervalle verlängert werden, so dass der Wartungsaufwand der Schneidvorrichtung reduziert werden kann.

Die Schneidvorrichtung und/oder Schneidelemente können dabei einzeln, in Gruppen, oder gemeinsam um die Rotationsachse rotiert werden. Die Schneidvorrichtung und/oder mindestens ein Schneidelement sind, insbesondere in einer Betriebsposition, Außerbetriebsposition, und/oder Wartungsposition, nicht frei drehbar, sondern nur in diskreten Stellschritten um die Rotationsachse drehbar. Ein Stellschritt kann dabei ein Winkel sein, der definiert ist, als der Quotient aus einer vollen Umdrehung, 360°, und der Anzahl der Schneidmesser des Schneidelementes. Ein Schneidelement mit drei Schneidmessern würde folglich in Stellschritten von 120° um die Rotationsachse verstellt. Durch eine Feineinstellung kann die Schneidvorrichtung und/oder ein Schneidelement abweichend von einem Stellschritt in beide Drehrichtungen feineingestellt werden. Hierdurch kann eine Ausrichtung der Schneidvorrichtung und/oder eines Schneidelementes beispielsweise zum Erntegut, dem Förderrotor, oder dem Gutleitblech verbessert werden, wodurch die Schnittleistung verbessert und übermäßiger Verschleiß verringert werden kann.

In einer vorteilhaften Ausgestaltung der Erfindung ist die Schneidvorrichtung und/oder mindestens ein Schneidelement um eine Schwenkachse verschwenkbar gelagert und ausgebildet. Die Schwenkachse kann in Erntegutförderrichtung vor oder hinter der Rotationsachse, insbesondere unterhalb und vorlicher als die Drehachse des Förderrotors, angeordnet sein. Ein Verschwenken und Rotieren der Schneidvorrichtung und/oder mindestens eines Schneidelementes kann dabei unabhängig oder in Kombination verfolgen. Dies hat den Vorteil, dass die Schneidvorrichtung und/oder Schneidelemente präzise, insbesondere in dem Erntegutkanal, ausgerichtet werden können, wodurch ein Schnitt des Erntegutes verbessert werden kann. Zudem kann durch ein Verschwenken der Schneidvorrichtung und/oder der Schneidelemente, beispielsweise aus dem Erntegutkanal heraus, ein Wechsel und/oder ein Rotieren der Schneidelemente vereinfacht werden.

In einer besonders vorteilhaften Ausgestaltung der Erfindung ist mindestens eins der Schneidmesser eines Schneidelementes als Blindmesser ausgebildet. Ein Blindmesser kann in Form eines schneidenden Schneidmessers ausgebildet sein, und insbesondere eine stumpfe Schneide aufweisen. Das Blindmesser kann, insbesondere in den Erntegutkanal oder zu dem Erntegutkanal hin, geschaltet werden, wenn kein Schneiden des Erntegutes erfolgen soll. Dies hat den Vorteil, dass unter Umständen nur das Blindmesser in Kontakt mit dem Erntegut kommt und ein Verschleiß der zum Schneiden vorgesehen Schneidmesser vermieden werden kann.

In einer weiter bevorzugten Ausgestaltung weist das Blindmesser, insbesondere anstelle einer schneidenden Schneide, eine Verschleißfläche auf, welche insbesondere aus einem besonders verschleißfesten Material besteht. Eine Verschleißfläche anstelle einer schneidenden Schneide hat den Vorteil, dass das Blindmesser bei Kontakt mit dem Erntegut einen verringerten Verschleiß und eine erhöhte Standzeit aufweist als ein Schneidmesser mit einer schneidenden Schneide, wodurch der Wartungsaufwand beispielsweise zum Tauschen eines Schneidelementes verringert werden kann.

In einer vorteilhaften Weiterbildung der Erntemaschine ist vorgesehen, dass ein Blindmesser an eine zugeordnete Ausnehmung in dem Gutleitblech derart angepaßt ist, dass die Ausnehmung, insbesondere in einer Betriebsposition und/oder Außerbetriebsposition der Schneidvorrichtung und/oder des zugeordneten Schneidelementes, im Wesentlichen durch das Blindmesser verschließbar ist. Das Blindmesser und/oder eine Verschleißfläche des Blindmessers kann dabei im Wesentlichen einer Form der Ausnehmung entsprechen - jedoch durch diese hindurch passen, und radial außenseitig dem Formverlauf des Gutleitbleches angepaßt sein. Durch das im Wesentliche Verschließen einer einem Schneidelement zugeordneten Ausnehmung in dem Gutleitblech kann ein hindurchdringen von Schmutz zu der Schneidvorrichtung vermieden werden. Der Vorteil ist dabei, dass die Schneidvorrichtung weniger stark verschmutzt und der Reinigungsaufwand reduziert werden kann.

Vorteilhafterweise ist eine Gegenschneide zum Zerkleinern des Erntegutes im Zusammenwirken mit der Schneidvorrichtung vorgesehen. Die Gegenschneide kann dabei ortsfest oder beweglich, insbesondere verschiebbar und/oder drehbar, ausgebildet sein. Der Förderrotor kann beispielsweise als Gegenschneide ausgebildet sein, wodurch die Gegenschneide bauraumsparend in die Erntemaschine integriert werden kann. Die Schneidvorrichtung wirkt zum Zerteilen des Erntegutes mit der Gegenschneide zusammen. Durch eine verstellbar ausgebildete Gegenschneide ist das Zusammenwirken der Schneidvorrichtung mit der Gegenschneide, insbesondere ein wirksamer Überlappungsbereich der Schneidvorrichtung mit der Gegenschneide, einstellbar, wodurch beispielsweise Schnittkräfte und eine Belastung eines Antriebs einstellbar sind.

In einer vorteilhaften Ausgestaltung der Erfindung ist die Schneidvorrichtung und/oder mindestens ein Schneidelement in eine Betriebsposition, eine Außerbetriebsposition und/oder eine Wartungsposition verlagerbar ausgebildet. Durch eine Verlagerung der Schneidvorrichtung und/oder mindestens eines Schneidelementes von einer Betriebsposition, in welcher Erntegut zerkleinert werden kann, in eine Außerbetriebsposition, in welcher keine Zerkleinerung des Erntegutes durch die Schneidvorrichtung erfolgt, kann eine Förderung des Erntegutes vereinfacht werden, oder die Erntemaschine ohne aufwändige Umrüstung für ein unterschiedliches Erntegut eingesetzt werden. Das Verbringen der Schneidvorrichtung und/oder mindestens eines Schneidelementes in eine Wartungsposition, beispielsweise durch ein zumindest teilweises, insbesondere seitliches, Herausziehen aus der Erntemaschine, bietet den Vorteil, dass mit geringem Aufwand die Schneidvorrichtung für eine Kontrolle oder Wartung zugänglich gemacht werden kann.

In einer weiteren vorteilhaften Ausgestaltung der Erfindung erfolgt ein Verlagern der Schneidvorrichtung und/oder mindestens eines Schneidelementes in eine Betriebsposition, eine Außerbetriebsposition und/oder eine Wartungsposition mittels einer Schwenkbewegung um die Schwenkachse und/oder eine Rotationsbewegung um die Rotationsachse. Durch eine Schwenkbewegung um die Schwenkachse können ein oder mehrere Schneideelemente zumindest aus dem Erntegutkanal herausgeschwenkt werden. Durch eine beispielsweise zusätzliche Rotation eines oder mehrerer Schneidelemente kann der Schwenkweg verringert werden, da beispielsweise Schneidelemente so gedreht werden können, dass Schneidmesser im Wesentlichen parallel zu einer Außenseite des Gutleitbleches ausgerichtet sein können, wodurch nur ein geringer Schwenkweg notwendig ist, um ein Schneidelement aus dem Erntegutkanal herauszuschwenken. Durch eine Schwenkbewegung und/oder Drehbewegung um die Rotationsachse kann ein Schneidelement derart eingestellt werden, dass ein Blindmesser in oder außerhalb der Ausnehmung in dem Gutleitblech angeordnet werden kann. Dies hat den Vorteil, dass nicht nur die Schneidmesser vor Verschleiß geschützt sind, sondern auch eine Verschmutzung der Schneidvorrichtung durch die Ausnehmungen verringert werden kann. In einer Wartungsposition können Schneidelemente, insbesondere schaltbar, frei drehbar ausgebildet sein. Dies hat den Vorteil, dass eine Sichtprüfung einzelner Schneidelemente durch einfaches manuelles Drehen ermöglicht werden kann.

Weiterhin ist in einer Ausgestaltung der Erfindung vorgesehen, dass ein Schneidelement in der Betriebsposition, insbesondere zum rotationsfreies Schneiden, im Wesentlichen feststehend ist und/oder verschwenkungsfrei, insbesondere in Stellschritten, um die Rotationsachse verstellbar ist, um einen Wechsel des in den Erntegutkanal hineinragenden Schneidmessers zu bewirken. Hierbei kann ein Schneidelement in der Betriebsposition um die Rotationsachse verstellt werden. Dies ermöglicht, dass beispielsweise bei einer Unterbrechung der Erntegutförderung in dem

### Überarbeitete Beschreibung Seite 7 (Reinschrift)

Erntegutkanal mindestens ein Schneidelement derart rotiert werden kann, dass ein anderes Schneidmesser in den Erntegutkanal zum Schneiden des Erntegutes hineinragt. Dies hat den Vorteil, dass in kürzester Zeit stumpfe Schneidmesser gegen schärfere Schneidmesser ausgewechselt werden können.

Das Schneidelement kann beispielsweise sternförmig und/oder um eine Rotationsachse herum symmetrisch ausgestaltet sein. Das Schneidelement kann mehrere Schneidmesser aufweisen, welche zur Rotationsachse hin konkav ausgebildet sein können.

Die Erfindung wird im Folgenden unter Hinweis auf die beigefügten Figuren anhand eines bevorzugten Ausführungsbeispiels näher erläutert. Daraus ergeben sich auch weitere Einzelheiten und Vorteile der Erfindung.

Es zeigen:
- Fig. 1: eine Ballenpresse in schematischer Seitenansicht mit einer Schneidvorrichtung gemäß der Erfindung;
- Fig. 2: eine schematische Seitenansicht eines Schneidelementes der Schneidvorrichtung im Eingriff mit einem Förderrotor; und
- Fig. 3: eine detaillierte Darstellung eines Schneidelementes mit drei schneidenden Schneidmessern.

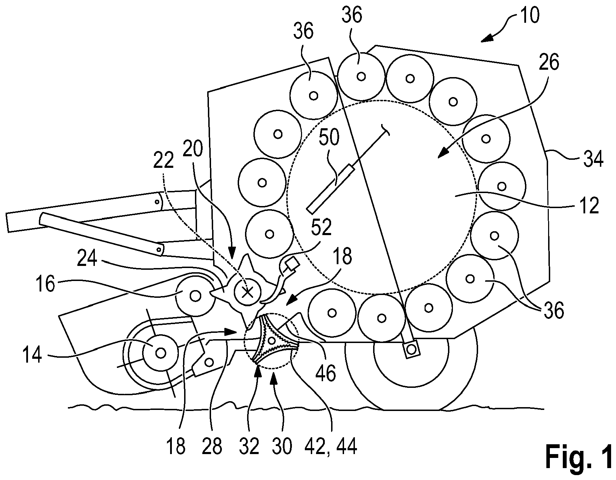

In Fig. 1 ist eine Erntemaschine 10 in Form einer Ballenpresse für Rundballen in einer schematischen Seitenansicht dargestellt. Eine Erntemaschine 10 kann in Form einer Rundballenpresse, mit fester oder variabler Presskammer, einer Quaderballenpresse oder eines Ladewagens ausgebildet sein. Diese werden üblicherweise durch ein Zugfahrzeug wie einen Traktor (nicht dargestellt) gezogen und über eine mit dem Traktor koppelbare Antriebswelle zum Antrieb der Förder- und Verarbeitungseinrichtungen mit Energie versorgt. Die dargestellte Ballenpresse 10 nimmt im Erntebetrieb auf dem Feldboden liegendes Erntegut, beispielsweise zum Schwad gelegtes Stroh oder Gras, auf und verarbeitet dieses zu einem gepressten und beispielsweise mit einem Netz verschnürten Ballen 12, der nach Fertigstellung heckseitig aus der Ballenpresse 10 ausgeworfen wird.

Das Erntegut wird von der Ballenpresse 10 mittels einer mit Zinken besetzten Aufsammeltrommel 14 vom Boden aufgenommen, um es den weiteren Förder- und Verarbeitungseinrichtungen der Ballenpresse 10 zuzuführen. Das Erntegut wird dabei mittels eines Förderorgans 16 wie einer Querförderstrecke von einer ursprünglichen Aufnahmebreite der Aufsammeltrommel 14 auf eine geringer Breite eines Erntegutkanals 18 zusammengeführt und zu einem nachgelagert angeordneten Förderrotor 20 gefördert. Der Förderrotor 20 ist um eine Drehachse 22 drehbar gelagert und weist eine Vielzahl von zueinander beabstandet angeordneten, sternförmigen Rotorelementen 24 auf. Die Rotorelemente 24 sind dabei entlang der Drehachse 22 des Förderrotors 20 wendelförmig, also zueinander verdreht, angeordnet. Die Rotorelemente 24 ragen an einer Unterseite des Förderrotors 20 in den Erntegutkanal 18 hinein und fördern das Erntegut zur Verdichtung in Richtung einer Presskammer 26 der Ballenpresse 10. Durch die wendeiförmige Anordnung der Rotorelemente 24 kann eine gleichmäßigere Förderung des Erntegutes und eine gleichmäßigere Belastung eines Antriebs des Förderrotors 20 erreicht werden.

Unmittelbar unterhalb des Förderrotors 20 erstreckt sich ein Gutleitelement 28 in Form eines gebogenen Bleches, welches den Erntegutkanal 18 über dessen gesamte Breite nach unten begrenzt. Unterhalb des Förderrotors 20 und des Gutleitelementes 28 ist eine Schneidvorrichtung 30 angeordnet, welche eine Vielzahl von Schneidelementen 32 aufweist, die zum Zerkleinern des Erntegutes durch das Gutleitelement 28 zumindest teilweise in den Erntegutkanal 18 hineinragen können. Die Schneidvorrichtung 30 ist dabei im Wesentlichen presskammerseitig des Förderrotors 20 angeordnet. Das zerkleinerte Erntegut wird anschließend der Presskammer 26 zugeführt, welche innerhalb eines Gehäuses 34 der Ballenpresse 10 durch kreisförmig angeordnete und antreibbare Presswalzen 36 ausgebildet ist. Zum Auswerfen eines fertig gepressten Ballens 12 aus der Presskammer 26 ist ein hinterer Teil des Gehäuses 34 mittels eines Aktors 50 in Form eines Hydraulikzylinders aufklappbar ausgebildet, wodurch der Ballen 12 heckseitig ausgeworfen werden kann.

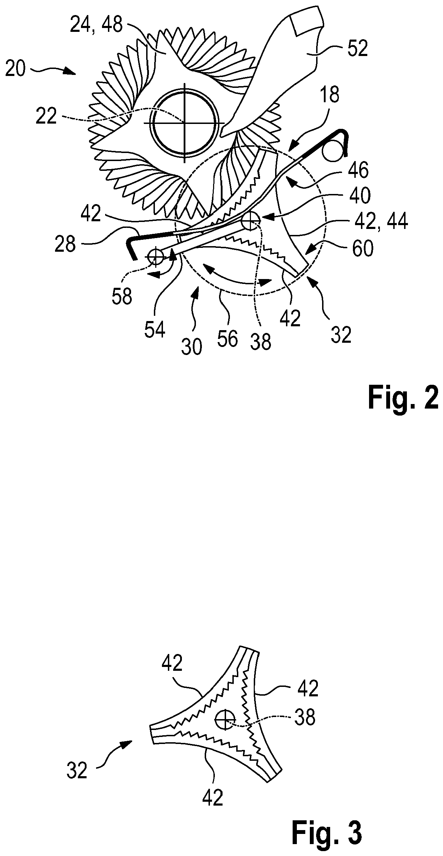

Eine erfindungsgemäß ausgebildete Schneidvorrichtung 30 ist in Figur 2 in einer Betriebsposition dargestellt. Die Schneidvorrichtung 30 weist eine Vielzahl von Schneidelementen 32 auf, welche bezogen auf den Erntegutkanal 18 quer zur Förderrichtung des Erntegutes nebeneinander angeordnet sind. Aufgrund der Darstellung als Seitenansicht ist in Figur 2 nur ein vorderes Schneidelement 32 dargestellt. Die Schneidvorrichtung 30 ist um eine Rotationsachse 38 frei drehbar gelagert und, insbesondere für eine Rotation in Stellschritten und/oder eine Feineinstellung, manuell und/oder motorisch antreibbar ausgebildet. Unter Verstellen in Stellschritten ist dabei zu verstehen, dass die Schneidvorrichtung 30 und/oder mindestens ein Schneidelement 32, insbesondere in einer Betriebsposition, Außerbetriebsposition, und/oder Wartungsposition, nicht frei drehbar, sondern nur in diskreten Stellschritten um die Rotationsachse 38 drehbar sind. Ein Stellschritt kann dabei ein Winkel sein, der definiert ist, als der Quotient aus einer vollen Umdrehung, 360°, und der Anzahl Schneidmesser 42, 44 des Schneidelementes 32. Ein Schneidelement 32 mit drei Schneidmessern 42, 44 würde folglich in Stellschritten von 120° um die Rotationsachse 38 verstellt. Zusätzlich oder alternativ zu den Stellschritten kann durch eine Feineinstellung die Schneidvorrichtung 30 und/oder ein Schneidelement 32 abweichend von einem Stellschritt in beide Drehrichtungen feineingestellt werden.

Die Schneidelemente 32 sind entlang der Rotationsachse 38 beabstandet zueinander an einer Trägerwelle 40, insbesondere lösbar, angeordnet und rotieren jeweils in einer Schneidebene 56. Zum Zerteilen des Erntegutes weisen die Schneidelemente 32 jeweils mindestens zwei Schneidmesser 42, 44 auf. Schneidelemente 32 sind im Wesentlichen senkrecht zu der Rotationsachse 38 der Schneidvorrichtung 30 angeordnet und können einstückig, beispielsweise sternförmig, oder mehrteilig ausgebildet sein. Bei einem mehrteilig aufgebauten Schneidelement 32 können die mindestens zwei Schneidmesser 42 lösbar an dem Schneidelement 32 befestigt sein. Die Schneidmesser 42, 44 können verschieden ausgestaltet sein. Das in Fig. 2 dargestellte Schneidelement 32 weist neben zwei schneidenden Schneidmessern 43 auch ein drittes Schneidmesser 42 in Form eines Blindmessers 44 auf. Dieses Blindmesser 44 kann in den Erntegutkanal 18 oder zu dem Erntegutkanal 18 hin rotiert werden, wenn ein Schneiden des Erntegutes nicht erforderlich ist. Das Blindmesser 44 kann statt einer Schneide ein Verschleißfläche 60 aufweisen. Radial außenseitig kann ein Schneidmesser 42, 44 eine im Wesentlichen konkave, bogenartige, und/oder gewellte Form aufweisen, wodurch eine Anpassung an das jeweils zu verarbeitende Erntegut vorgenommen werden kann. Zudem kann ein Blindmesser 44 und/oder eine Verschleißfläche 60 eine dem Formverlauf der Ausnehmung 46 und/oder dem Gutleitblech 28 angepaßte Form aufweisen. Dies ermöglicht weitestgehend ein Verschließen der Ausnehmung 46 bei entsprechendem Verschwenken und/oder Rotieren des Schneidelementes 32.

In der dargestellten Betriebsposition der Schneidvorrichtung 30 ragen die Schneidelemente 32 mit den Schneidmessern 42 zumindest teilweise in den Erntegutkanal 18 hinein. Hierfür weist das Gutleitelement 28, welches den Erntegutkanal 18 bodenseitig begrenzt, eine Vielzahl an schlitzartigen Ausnehmungen 46 auf, welche abgestimmt auf die Schneidebenen 56 der Schneidvorrichtung 30 in dem Gutleitelement 28 angeordnet sind. In dem Erntegutkanal 18 wirken die Schneidelemente 32 mit einer Gegenschneiden 48 zusammen, um durch den Erntegutkanal 18 gefördertes Erntegut zu zerkleinern. Die Gegenschneide 48 ist in dem gezeigten Ausführungsbeispiel mehrteilig ausgebildet und wird durch den Förderrotor 20 und insbesondere durch dessen Rotorelemente 24 gebildet.

Die Schneidvorrichtung 30 und/oder die Schneidelemente 32 sind über einen Rahmen 54 um eine Schwenkachse 58 verschwenkbar gelagert. Dies ermöglicht, zusätzlich oder alternativ zu einer Rotation um die Rotationsachse 38, ein Verschwenken der Schneidvorrichtung 30 und/oder mindestens eines Schneidelementes 32 in eine Betriebsposition, in der Schneidelemente 32 zumindest teilweise in den Erntegutkanal 18 zur Zerkleinerung des Erntegutes hineinragen, in eine Außerbetriebsposition, in der keine Schneidelemente 32 oder Schneidmesser 42, 44 in den Erntegutkanal 18 hineinragen. Darüber hinaus ist die Schneidvorrichtung 30 zur einfacheren Wartung aus der Außerbetriebsposition in eine Wartungsposition verbringbar, beispielsweise durch zumindest teilweises seitliches Herausziehen aus der Erntemaschine 10.

In einer Außerbetriebsposition können beispielsweise die Schneidelemente 32 so um die Rotationsachse 38 rotiert werden, dass ein Schneidmesser 42, 44 im Wesentlichen benachbart zu einem Gutleitblech 28 angeordnet ist und durch eine geringe Verschwenkung um die Schwenkachse 58 aus dem Erntegutkanal 18 und dem Gutleitblech 28 herausgeschwenkt werden. In einer Wartungsposition können die Schneidvorrichtung 30 und/oder mindestens ein Schneidelement 32 weitest möglich, beispielsweise nach unten, von dem Erntegutkanal 18 weggeschwenkt werden.

Die Schneidebenen 56 der Schneidvorrichtung 30 sind jeweils zwischen zwei benachbart zueinander angeordneten Rotorelementen 24 des Förderrotors 24 angeordnet. Die innerhalb einer Schneidebene 56 angeordneten Schneidelemente 32 stehen dabei, insbesondere in einer Betriebsposition der Schneidvorrichtung 30, zum Zerteilen des Erntegutes in kämmendem Eingriff mit den Rotorelementen 24, welche dabei die Gegenschneiden 48 für die Schneidelemente 32 und/oder Schneidmesser 42 bilden. Um ein Ansammeln von Erntegut an dem Förderrotor 20, insbesondere zwischen den Rotorelementen 24, zu vermeiden, sind Rotorabstreifer 52 vorgesehen, welche entlang der Drehachse 22 über die Breite des Förderrotors 20 derart angeordnet sind, dass die Rotorabstreifer 52 jeweils zwischen den Rotorelementen 24 und/oder innerhalb der Schneidebenen 56 angeordnet sind.

In Figur 3 ist ein Schneidelement 30 dargestellt, welches drei schneidende Schneidmesser 42 aufweist. Die Schneidmesser 42 sind dabei konkav ausgebildet und durch einen Stellschritt von im Wesentlichen 120° kann jeweils ein neues Schneidmesser 42 beispielsweise in den Erntegutkanal (nicht dargestellt) geschaltet werden. Die Schneidmesser 42 sind einstückig mit dem Schneidelement 32 ausgebildet und in einer Schneidebene 56 angeordnet.

### Bezugszeichenliste

- 10: Erntemaschine
- 12: Ballen
- 14: Aufsammeltrommel
- 16: Förderorgan
- 18: Erntegutkanal
- 20: Förderrotor
- 22: Drehachse
- 24: Rotorelement
- 26: Presskammer
- 28: Gutleitelement
- 30: Schneidvorrichtung
- 32: Schneidelement
- 34: Gehäuse
- 36: Presswalze
- 38: Rotationsachse
- 40: Trägerwelle
- 42: Schneidmesser
- 44: Blindmesser
- 46: Ausnehmung
- 48: Gegenschneide
- 50: Aktor
- 52: Rotorabstreifer
- 54: Rahmen
- 56: Schneidebene
- 58: Schwenkachse
- 60: Verschleißfläche

## Patentansprüche

1. Erntemaschine, insbesondere Ballenpresse oder Ladewagen, mit einer Schneidvorrichtung (30) für landwirtschaftliches Erntegut, wobei die Schneidvorrichtung (30) eine Vielzahl von jeweils in einer Schneidebene (56) wirkenden Schneidelementen (32) aufweist, wobei die Schneidelemente (32) in Bezug auf einen von Erntegut durchströmten Erntegutkanal (18) nebeneinander angeordnet sind und während des Betriebes der Schneidvorrichtung (30) zum Schneiden von Erntegut durch ein mit Ausnehmungen (46) versehenes Gutleitelement (28) zumindest teilweise in den Erntegutkanal (18) hineinragen, und einem antreibbaren Förderrotor (20) zum Fördern des Erntegutes, **dadurch gekennzeichnet, dass**
ein Schneidelement (32) mindestens zwei Schneidmesser (42, 44) aufweist, und um eine Rotationsachse (38) drehbar gelagert und in Stellschritten um die Rotationsachse (38) verstellbar ausgebildet ist.

2. Erntemaschine nach Anspruch 1, **dadurch gekennzeichnet, dass** die Schneidvorrichtung (30) und/oder mindestens ein Schneidelement (32) um eine Schwenkachse (58) verschwenkbar gelagert und ausgebildet ist.

3. Erntemaschine nach Anspruch 1 oder 2, **dadurch gekennzeichnet, dass** mindestens eins der Schneidmesser (42) eines Schneidelementes (32) als Blindmesser (44) ausgebildet ist, wobei das Blindmesser (44) in Form eines Schneidmessers ausgebildet ist und eine stumpfe Schneide aufweist.

4. Erntemaschine nach Anspruch 3, **dadurch gekennzeichnet, dass** das Blindmesser (44) eine Verschleißfläche (60) aufweist, welche insbesondere aus einem besonders verschleißfesten Material besteht.

5. Erntemaschine nach Anspruch 3 oder 4, **dadurch gekennzeichnet, dass** ein Blindmesser (44) an eine zugeordnete Ausnehmung (46) in dem Gutleitblech (28) derart angepaßt ist, dass die Ausnehmung (46) im Wesentlichen durch das Blindmesser (44) verschließbar ist.

6. Erntemaschine nach einem der Ansprüche 3 bis 5, **dadurch gekennzeichnet, dass** das Blindmesser (44) in den Erntegutkanal (18) oder zu dem Erntegutkanal (18) hin rotierbar ist.

7. Erntemaschine nach einem der vorherigen Ansprüche, **dadurch gekennzeichnet, dass** eine Gegenschneide (48) zum Zerkleinern des Erntegutes im Zusammenwirken mit der Schneidvorrichtung (30) vorgesehen ist.

8. Erntemaschine nach einem der vorherigen Ansprüche, **dadurch gekennzeichnet, dass** die Schneidvorrichtung (30) und/oder mindestens ein Schneidelement (32) in eine Betriebsposition, eine Außerbetriebsposition und/oder eine Wartungsposition verlagerbar ausgebildet ist.

9. Erntemaschine nach einem der vorherigen Ansprüche, **dadurch gekennzeichnet, dass** ein Verlagern der Schneidvorrichtung (30) und/oder mindestens eines Schneidelementes (32) in eine Betriebsposition, eine Außerbetriebsposition und/oder eine Wartungsposition mittels einer Schwenkbewegung um die Schwenkachse (58) und/oder eine Rotationsbewegung um die Rotationsachse (38) erfolgt.

10. Erntemaschine nach einem der vorherigen Ansprüche, **dadurch gekennzeichnet, dass** ein Schneidelement (32) in der Betriebsposition im Wesentlichen feststehend ist und/oder verschwenkungsfrei, insbesondere in Stellschritten, um die Rotationsachse (38) verstellbar ist, um einen Wechsel des in den Erntegutkanal (18) hineinragenden Schneidmessers (42, 44) zu bewirken.

## Claims

1. A harvesting machine, in particular a baler or a loading vehicle, with a cutting device (30) for harvested agricultural material, wherein the cutting device (30) has a plurality of cutting elements (32) which respectively act in a cutting plane (56), wherein the cutting elements (32) are disposed next to each other with respect to a harvested material channel (18) through which harvested material passes and, during the operation of the cutting device (30), protrude at least in part into the harvested material channel (18) through a material guide element (28) provided with recesses (46) in order to cut harvested material, and a conveying rotor (20) which can be driven in order to convey the harvested material, **characterized in that** a cutting element (32) has at least two cutting blades (42, 44) and is rotatably mounted about an axis of rotation (38) and is configured so as to be adjustable in increments about the axis of rotation (38).

2. The harvesting machine according to claim 1, **characterized in that** the cutting device (30) and/or at least one cutting element (32) is pivotably mounted and configured about a pivot axis (58).

3. The harvesting machine according to claim 1 or claim 2, **characterized in that** at least one of the cutting knives (42) of a cutting element (32) is configured as a dummy blade (44), wherein the dummy blade (44) is configured in the shape of a cutting blade and has a blunt cutting edge.

4. The harvesting machine according to claim 3, **characterized in that** the dummy blade (44) has a wear surface (60) which in particular consists of a particularly wear-resistant material.

5. The harvesting machine according to claim 3 or claim 4, **characterized in that** a dummy blade (44) is conformed to an associated recess (46) in the material guide plate (28) in a manner such that the recess (46) can be substantially closed off by the dummy blade (44).

6. The harvesting machine according to one of claims 3 to 5, **characterized in that** the dummy blade (44) can be rotated into the harvested material channel (18) or towards the harvested material channel (18).

7. The harvesting machine according to one of the preceding claims, **characterized in that** a counter-cutter (48) is provided for the comminution of the harvested material in conjunction with the cutting device (30).

8. The harvesting machine according to one of the preceding claims, **characterized in that** the cutting device (30) and/or at least one cutting element (32) is configured so as to be movable into an operational position, a non- operational position and/or a maintenance position.

9. The harvesting machine according to one of the preceding claims, **characterized in that** a movement of the cutting device (30) and/or at least one cutting element (32) into an operational position, a non- operational position and/or a maintenance position is carried out by means of a pivoting movement about the pivot axis (58) and/or a rotational movement about the axis of rotation (38).

10. The harvesting machine according to one of the preceding claims, **characterized in that** a cutting element (32) is substantially stationary in the operating position and/or can be adjusted without pivoting, in particular in increments, about the axis of rotation (38), in order to switch the cutting blade (42, 44) which protrudes into the harvested material channel (18).

## Revendications

1. Machine de récolte, en particulier presse à balles ou remorque autochargeuse, comprenant un dispositif de coupe (30) pour du produit agricole récolté, le dispositif de coupe (30) comportant une pluralité d'éléments de coupe (32) agissant respectivement dans un plan de coupe (56), les éléments de coupe (32) étant disposés les uns à côté des autres par rapport à un canal de produit récolté (18) parcouru par du produit récolté et, pendant le fonctionnement du dispositif de coupe (30), pénétrant au moins en partie dans le canal de produit récolté (18) à travers un élément de guidage de produit (28) pourvu d'évidements (46) pour couper du produit récolté, et comprenant un rotor d'amenée entraînable (20) pour amener le produit récolté, **caractérisée en ce qu'** un élément de coupe (32) comporte au moins deux couteaux de coupe (42, 44) et est monté à rotation autour d'un axe de rotation (38) et est conçu de manière réglable par pas de réglage autour de l'axe de rotation (38).

2. Machine de récolte selon la revendication 1, **caractérisée en ce que** le dispositif de coupe (30) et/ou au moins un élément de coupe (32) est monté et conçu de manière pivotante autour d'un axe de pivotement (58).

3. Machine de récolte selon la revendication 1 ou 2, **caractérisée en ce qu'**au moins un des couteaux de coupe (42) d'un élément de coupe (32) est conformé en faux couteau (44), le faux couteau (44) étant conçu sous la forme d'un couteau de coupe et comportant une lame mousse.

4. Machine de récolte selon la revendication 3, **caractérisée en ce que** le faux couteau (44) comporte une surface d'usure (60) qui est constituée en particulier d'un matériau particulièrement résistant à l'usure.

5. Machine de récolte selon la revendication 3 ou 4, **caractérisée en ce qu'**un faux couteau (44) est adapté à un évidement associé (46) dans le déflecteur de produit (28), de façon que l'évidement (46) puisse être sensiblement fermé par l'intermédiaire du faux couteau (44).

6. Machine de récolte selon une des revendications 3 à 5, **caractérisée en ce que** le faux couteau (44) peut tourner dans le canal de produit récolté (18) ou en direction du canal de produit récolté (18).

7. Machine de récolte selon une des revendications précédentes, **caractérisée en ce qu'**une contre-lame (48) est prévue pour broyer le produit récolté conjointement avec le dispositif de coupe (30).

8. Machine de récolte selon une des revendications précédentes, **caractérisée en ce que** le dispositif de coupe (30) et/ou au moins un élément de coupe (32) est conçu pour pouvoir se déplacer vers une position de fonctionnement, une position de non-fonctionnement et/ou une position de maintenance.

9. Machine de récolte selon une des revendications précédentes, **caractérisée en ce qu'**un déplacement du dispositif de coupe (30) et/ou au moins d'un élément de coupe (32) vers une position de fonctionnement, une position de non-fonctionnement et/ou une position de maintenance s'effectue au moyen d'un mouvement pivotant autour de l'axe de pivotement (58) et/ou d'un mouvement rotatoire autour de l'axe de rotation (38).

10. Machine de récolte selon une des revendications précédentes, **caractérisée en ce que**, dans la position de fonctionnement, un élément de coupe (32) est sensiblement fixe et/ou réglable sans pivotement, en particulier par pas de réglage, autour de l'axe de rotation (38) afin d'effectuer un changement du couteau de coupe (42, 44) pénétrant dans le canal de produit récolté (18).
